# DEMANDE DE BREVET EUROPEEN

(11) **EP 0 732 722 A1**
(43) Date de publication de la demande: **18.09.1996**
(21) Numéro de dépôt: 96400541.7
(22) Date de dépôt: 15.03.1996
(51) Int. Cl.: H01J 9/18, H01J 9/42, G01B 11/27

(54) **Dispositif d'ajustement de coaxialité d'une électrode montée dans une enceinte**

(30) Priorité: 17.03.1995 FR 9503135
(71) Demandeur: COMMISSARIAT A L'ENERGIE ATOMIQUE, 75015 Paris (FR)
(72) Inventeur: Auliac, Patrick, 33170 Gradignan (FR)
(74) Mandataire: Dubois-Chabert, Guy

(57) **Abrégé**

Dispositif d'ajustement de coaxialité d'une électrode (25) dans une enceinte à vide (1). L'électrode (25) est montée sur une couronne (13) déplacée par des touches perpendiculairement à l'axe (Z) et la qualité de l'ajustement de position est contrôlée par un système amovible à lunette de visée (31) muni d'un moyen analogue de réglage de position, à touches de déplacement, pour le placer devant une référence fixe (9). Pour des électrodes à symétrie de révolution, la lunette de visée est montée sur un disque tournant (36) éventuellement avec l'interposition d'un mécanisme de translation (38) de réglage de sa distance radiale à l'axe (Z).

L'invention peut s'appliquer à certaines diodes d'émission de micro-ondes pour des canons à électrons.

## Description

L'invention ressortit à un dispositif d'ajustement de coaxialité d'une électrode montée dans une enceinte.

Elle sera décrite en application à un canon à électrons de grande puissance, et plus précisément à une diode utilisée dans de tels canons et dont le but est d'émettre un faisceau de micro-ondes. De telles diodes comprennent une cathode et une anode dans une enceinte à vide. Dans les constructions connues, la cathode est en forme de lame circulaire et l'anode en forme de disque à fente annulaire étroite qu'il convient de placer devant la lame. C'est en ce sens qu'on parle de coaxialité des électrodes. Il est cependant difficile d'obtenir un ajustement précis des électrodes l'une par rapport à l'autre, et problématique de procéder à un tel ajustement sur des électrodes situées dans une enceinte à vide de petites dimensions. L'invention a pour objet un montage particulier qui permet d'obtenir commodément un tel ajustement de coaxialité malgré ces difficultés.

On utilisera deux groupes de moyens : le premier permettra de déplacer une des électrodes pour obtenir la coaxialité, et l'autre sera un moyen de contrôle par un instrument de visée pour vérifier le résultat obtenu. Ce second moyen, qui sera normalement placé sur le trajet des micro-ondes émises, sera démonté avant la mise en service de la diode. Sous sa forme la plus générale, l'invention peut alors être définie comme un dispositif d'ajustement de coaxialité d'une électrode montée dans une enceinte à une électrode fixée à l'enceinte, caractérisé en ce qu'il comprend une première structure de liaison de l'électrode à ajuster à l'enceinte permettant de déplacer l'électrode à ajuster dans un plan perpendiculaire à l'axe de l'électrode fixe, et un système de visée comprenant un support monté à une extrémité de l'enceinte de façon démontable et en appui plan et devant un hublot de l'enceinte, un instrument de visée dirigé vers les électrodes à travers le hublot, l'instrument de visée étant relié au support par une seconde structure de liaison permettant de déplacer l'instrument de visée dans un second plan perpendiculaire à l'axe de l'électrode fixe.

Les structures de liaison peuvent comprendre deux touches mobiles dans des directions sécantes et avantageusement à angle droit, coulissant à travers l'enceinte ou sur le support et repoussant une couronne porteuse de l'électrode à ajuster ou un plateau porteur de l'instrument de visée ; un ressort repoussant ou maintenant la couronne ou le plateau sur les touches ; et éventuellement une troisième touche dirigée vers les précédentes, coulissant dans les mêmes conditions et affectée au serrage de la couronne ou du plateau contre les touches de déplacement. Un tel dispositif rend les opérations d'ajustement et de contrôle très commodes, en permettant notamment de déplacer correctement l'instrument de visée. Enfin, on peut envisager que le plateau soit composé d'une couronne repoussée et serrée par les touches et d'un disque tournant dans le plateau, l'instrument de visée étant uni au disque par un mécanisme de déplacement dans une direction perpendiculaire et sécante à l'axe de l'électrode fixe, et le disque étant lié à la couronne par des moyens d'indexage. Cette disposition convient bien aux électrodes circulaires.

L'invention va maintenant être décrite dans une réalisation particulière et non limitative à l'aide des figures suivantes :
- la figure 1 est une vue en coupe axiale de l'invention,
- et la figure 2 est une coupe transversale qui illustre les systèmes de liaison.

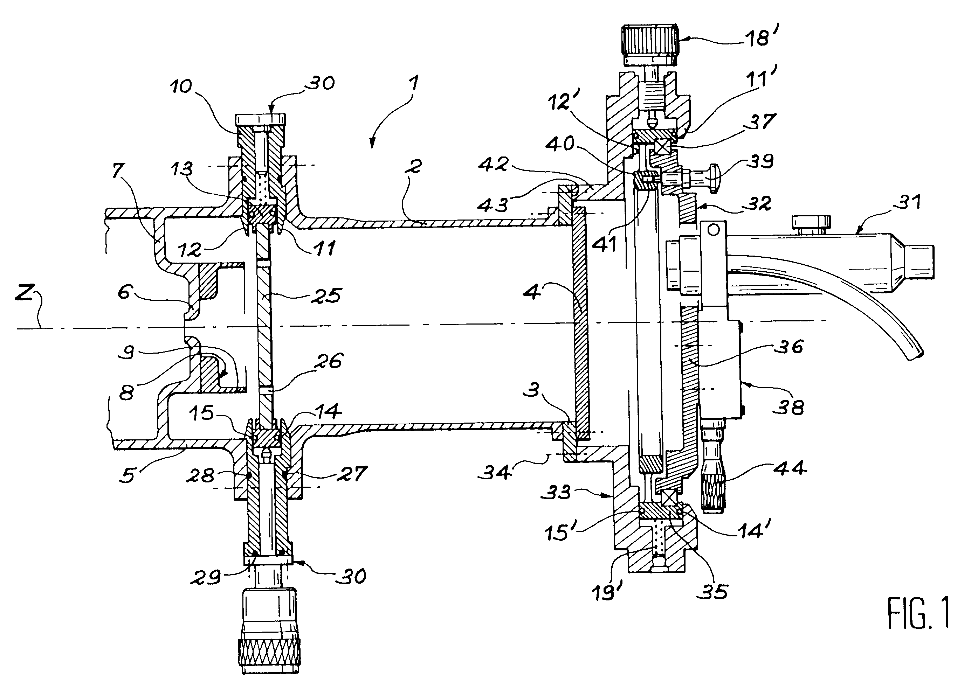

La figure 1 représente tout d'abord une enceinte à vide 1 composée essentiellement d'un manchon 2 terminé à l'extrémité de droite par une bride 3 détachable et par un hublot 4. Le manchon est prolongé à gauche par un second manchon 5 dont n'on a représenté qu'une partie et qui porte un moyeu 6 par l'intermédiaire de nervures 7. Une cathode 8 est visée au moyeu 6 : sa partie la plus importante est la lame circulaire 9 déjà citée et dont l'axe Z de concentricité s'étend jusqu'au hublot 4 et le traverse.

Les manchons 2 et 5 ne sont pas raccordés directement mais sont réunis à une face respective d'une armature 10 circulaire évidée qui se termine, à l'intérieur de l'enceinte 1, en deux corniches 11 et 12 circulaires et parallèles qui enserrent une couronne 13 de part et d'autre de ses deux faces planes. Des patins 14 et 15 formés d'un cercle de billes sont disposés entre la couronne 13 et les corniches 11 et 12 et permettent à la couronne 13 de se mouvoir librement dans le plan, perpendiculaire à l'axe Z, dans lequel elle s'étend.

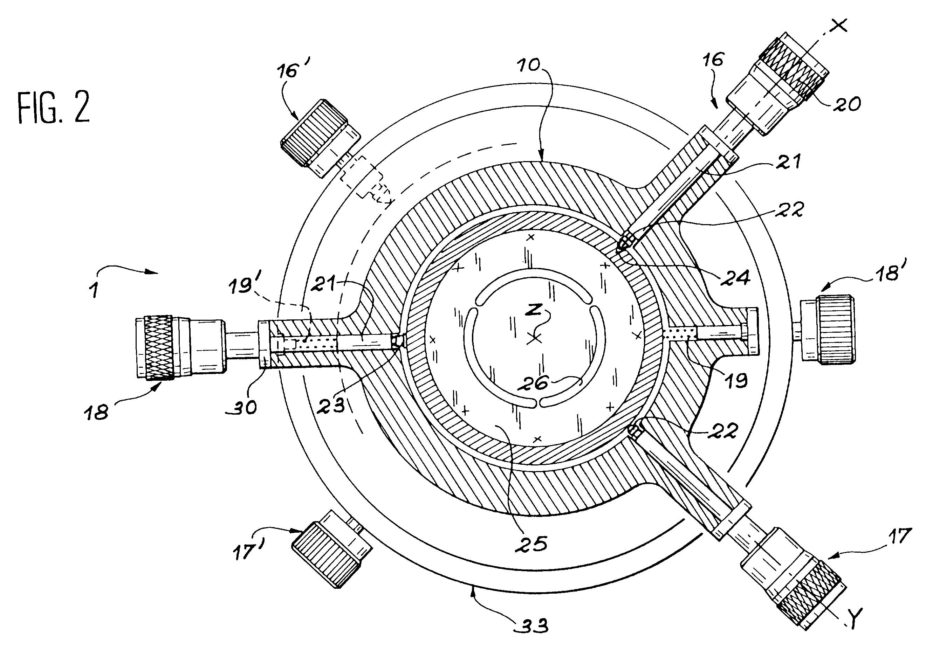

Ces mouvements sont limités par un mécanisme de liaison entièrement visible à la figure 2. L'armature 10 est munie de quatre protubérances externes dont trois d'entre elles sont associées à des touches 16, 17 et 18 et la quatrième contient un ressort 19. Les touches 16, 17 et 18 sont semblables par leur structure : une poignée de manipulation 20 hors de l'enceinte 1, dont la rotation commande une tige 21 par un mouvement coulissant à travers la protubérance correspondante de l'armature 10. Les tiges 21 touchent la couronne 13 par une extrémité. Plus précisément, les touches 16 et 17 sont des touches de réglage de position et leurs tiges 21 sont disposées dans des direction sécantes, normalement à angle droit, matérialisant ainsi des directions de réglage X et Y perpendiculaires à l'axe Z. Leurs extrémités 22 sont relativement pointues pour repousser la couronne 13 dans leur direction d'extension. Par contre, la troisième touche 18 a une extrémité 23 plate : il s'agit d'une touche de blocage de la couronne 13 dont la tige 21 est dirigée vers les touches de déplacement 16 et 17 et plus précisément dans la bissectrice de l'angle qu'elles forment. Quand la couronne 13 doit être déplacée, la touche 18 est rétractée, on déplace les touches 16 et 17 selon les déplacements voulus en X et Y, et la touche 18 est avancée ensuite pour bloquer la couronne 13. Le ressort 19, situé à l'opposé de la troisième touche 18, est un ressort de traction coaxial à la tige 21 de cette touche et tiré entre l'armature 10 et la couronne 13 pour maintenir celle-ci contre les touches de déplacement 16 et 17. Les rotations accidentelles de la couronne 13 sont évitées par une encoche 24 dans laquelle entre l'extrémité 22 de la touche de déplacement 16.

La couronne 13 porte l'anode 25, en forme de disque et qui est munie d'une fente 26 qui la traverse de part en part et qui est en forme de cercle présentant quelques interruptions pour lier le centre et la périphérie de l'anode.

Les touches 16 à 17, d'une catégorie disponible dans le commerce, ne permettent pas à l'air de fuir à travers elles pour se répandre dans l'enceinte 1. On voit aussi, en particulier à la figure 1, que des joints circulaires 27 et 28 sont serrés entre l'armature 10 d'une part et les manchons 2 et 5 d'autre part pour compléter l'étanchéité, et que d'autres joints circulaires 29 sont engagés autour des perçages des protubérances par lesquels passent le ressort 19 et les tiges 21, et serrés entre l'armature 10 et des couvercles 30 solidaires des touches 17 à 18 et du ressort 19, toujours avec le même but. Le mécanisme de déplacement de l'anode 25 ne rompt donc pas l'étanchéité de l'enceinte 1 quoiqu'il impose de séparer les manchons 2 et 5.

De tels problèmes d'étanchéité n'apparaissent pas avec le système de contrôle qui va maintenant être décrit et dont l'élément essentiel est une lunette de visée 31 dirigée vers les électrodes 8 et 25 pour les observer à travers le hublot 4. La lunette de visée 31 est montée sur un plateau 32 lui-même monté sur un support 33 qu'on fixe à la bride 3 par un cercle de vis 34. Quand les vis 34 sont ôtées, tout le système de contrôle est détaché de l'enceinte à vide 1.

Le support 33 comprend plusieurs détails de construction analogues à ceux de l'armature 10, et il est en particulier agencé pour recevoir des touches 16', 17' et 18' concourantes et disposées de la même façon que les touches 16 à 18 de la figure 2, ainsi qu'un ressort 19' placé de la même façon que le ressort 19 et tendu entre le plateau 32 et le support 33 pour rappeler celui-là contre les touches 16' et 17'. De même, le support 33 forme deux corniches 11' et 12' pour retenir le plateau 32 suivant l'axe Z tout en lui permettant de glisser librement en restant dans son plan, dans les directions X et Y, grâce de nouveau à deux cercles de billes 14' et 15' logés entre le support 32 et les corniches 11' et 12'.

Le plateau 32 est en réalité composé d'une couronne extérieure 35, à laquelle s'applique plus précisément la description qui précède, et d'un disque 36 pouvant tourner dans la couronne extérieure 35 autour d'un axe parallèle à l'axe Z grâce à un roulement à billes 37 qui les unit. Le disque 36 porte la lunette de visée 31 par l'intermédiaire d'un mécanisme de translation 38 à poignée de commande 44 et qui s'étend perpendiculairement à l'axe Z. Enfin, le disque 36 porte un doigt d'indexage 39 mobile suivant l'axe Z vers un soubassement 40 de la couronne extérieure 33 dans lequel des perçages 41 ont été forés. Leur disposition permet de bloquer le disque 36 à certaines orientations privilégiées, la couronne externe 35 étant bloquée en rotation par une des touches 16', de la même manière que la couronne 13.

Enfin, on remarque que le support 33 est terminé par un socle cylindrique 42 assez mince pour fournir un appui plan satisfaisant sur la bride 3, qui présente une face 43 également plane vers ce socle 42. Cette précaution garantit la bonne direction de la visée.

Le fonctionnement de l'appareil devient aisé à comprendre au terme de cette description. On agit sur les touches 16 et 17 pour placer aussi bien que possible l'anode 25 coaxialement à la cathode 8, après avoir placé la lunette de visée 31 devant la lame 9 ; pour cela, on agit sur les touches 16' et 17' ainsi que sur le mécanisme de translation 38 pour placer le centre du disque 36 dans l'axe Z et l'axe de visée de la lunette 31 au même rayon que la lame 9. Le parcours d'un cercle par la lunette de visée 31 en tournant le disque 36 permet de s'assurer de la bonne position de la lunette de visée 31. On peut ensuite déplacer l'anode 25 pour parfaire son ajustement de position. On déplacera éventuellement un peu la lunette de visée 31 en direction radiale grâce au mécanisme de translation 38, pour suivre un bord intérieur ou extérieur de la fente 26, et on refera tourner le disque 36 pour suivre le bord choisi et vérifier définitivement la coaxialité de l'anode 25. En pratique, les perçages 41 seront ménagés devant les tiges des touches 16' et 17' pour qu'on déplace la lunette de visée 31 suivant les directions principales choisies Y et Z.

L'erreur de coaxialité est réduite à 0,02 mm dans chacune des directions X et Y dans une réalisation concrète.

## Revendications

1. Dispositif d'ajustement de coaxialité d'une électrode (25) montée dans une enceinte (1) à une électrode (8) fixée à l'enceinte (1), caractérisé en ce qu'il comprend une première structure de liaison (10, 13, 16 à 18) de l'électrode (25) à ajuster à l'enceinte (1) permettant de déplacer l'électrode à ajuster dans un plan perpendiculaire à l'axe (Z) de l'électrode fixe, et un système de visée comprenant un support (33) monté à une extrémité de l'enceinte de façon démontable (34) et en appui plan et devant un hublot (4) de l'enceinte (1), un instrument de visée (31) dirigé vers les électrodes (8, 25) à travers le hublot, l'instrument de visée étant relié au support par une seconde structure de liaison (32, 16' à 18') permettant de déplacer l'instrument de visée dans un second plan perpendiculaire à l'axe (Z) de l'électrode fixe.

2. Dispositif d'ajustement selon la revendication 1, caractérisé en ce que la première structure de liaison comprend deux touches (16, 17) mobiles dans des directions sécantes, coulissant à travers l'enceinte et repoussant une couronne (13) porteuse de l'électrode (25) à ajuster, une armature de support (11, 12) de la couronne fixée à l'enceinte (1), et un ressort (19) repoussant la couronne vers les touches.

3. Dispositif d'ajustement selon l'une quelconque des revendications 1 ou 2, caractérisé en ce que la seconde structure de liaison comprend deux touches (16', 17') mobiles dans des directions sécantes, coulissant sur le support et repoussant un plateau (32) porteur de l'instrument de visée et retenu par le support (33), et un ressort (19') repoussant le plateau vers les touches.

4. Dispositif d'ajustement selon la revendication 2, caractérisé en ce que la première structure de liaison comprend une troisième touche (18) coulissant à travers l'enceinte et serrant la couronne contre les touches mobiles.

5. Dispositif d'ajustement selon la revendication 3, caractérisé en ce que la seconde structure de liaison comprend une troisième touche (18') coulissant sur le support et serrant le plateau contre les touches mobiles.

6. Dispositif d'ajustement selon l'une quelconque des revendications 1 à 5, caractérisé en ce que le plateau (32) est composé d'une couronne repoussée et serrée par les touches et d'un disque (36) tournant dans la couronne (35), l'instrument de visée (31) étant uni au disque (36) par un mécanisme de déplacement (38) dans une direction perpendiculaire et sécante à l'axe de l'électrode fixe (8), le disque étant lié à la couronne par des moyens d'indexage (40, 41).
